# EUROPÄISCHE PATENTSCHRIFT

(11) **EP 2 364 520 B1**
(45) Veröffentlichungstag und Bekanntmachung des Hinweises auf die Patenterteilung: **25.01.2017**
(21) Anmeldenummer: 09799033.7
(22) Anmeldetag: 17.12.2009
(51) Int. Cl.: H01R 24/76, H01R 13/717

(54) **ELEKTRISCHES INSTALLATIONSGERÄT**
ELECTRIC INSTALLATION DEVICE
APPAREIL D'INSTALLATION ÉLECTRIQUE

(30) Priorität: 22.12.2008 DE 102008064453
(43) Veröffentlichungstag der Anmeldung: 14.09.2011
(73) Patentinhaber: Schneider Electric Industries SAS, 92500 Rueil-Malmaison (FR)
(72) Erfinder: VICKTORIUS, Richard, 50733 Köln (DE)
(74) Vertreter: Manitz, Finsterwald & Partner GbR
(86) Internationale Anmeldenummer: PCT/EP2009/009089
(87) Internationale Veröffentlichungsnummer: WO 2010/072371

(56) Entgegenhaltungen:
- EP-A1- 1 610 422
- DE-A1-102005 016 082
- DE-B3-102004 028 546
- DE-B3-102006 017 915
- DE-B3-102007 001 850
- DE-B3-102007 018 177
- DE-U1-202006 006 105

## Beschreibung

Die Erfindung betrifft ein elektrisches Installationsgerät nach dem Oberbegriff des Patentanspruches 1 (vgl. DE 20 2006 006 105 U1).

Im Rahmen der Gebäudeinstallationstechnik werden elektrische Installationsgeräte dazu verwendet, elektrische Verbraucher mittels Steckdosen mit Energie zu versorgen oder mittels Schaltelementen die Energieversorgung von elektrischen Verbrauchern zu steuern. Solche Installationsgeräte können ortsfest angeordnet sein und umfassen einen Gerätesockel, den außenseitig ein Tragrahmen umgibt, der die Befestigung in einem Installationsgehäuse ermöglicht. Frontseitig ist ein Frontelement befestigt, das abhängig von der Ausführungsform ein- oder mehrteilig ausgebildet sein kann. Für besondere Anwendungen, beispielsweise um das Installationsgerät selbst bzw. die Umgebung zu beleuchten und/oder um spezielle Funktionszustände anzuzeigen, können die Installationsgeräte optische Signaleinrichtungen aufweisen, die in das Frontelement in verschiedener Art und Weise integriert sein können.

Aus dem Stand der Technik sind Installationsgeräte mit seitlich des Gerätesockels angeordneten Signaleinrichtungen bekannt, welche ein Fenster in einem Frontelement ausleuchten. Des Weiteren ist im Stand der Technik offenbart, Beleuchtungseinrichtungen in die Frontflächen, Rahmen und/ oder Schaltelemente zu integrieren (vgl. Z.B. DE 10 2007 001 850 B3).

Darüber hinaus sind externe Leuchtmittel bekannt, die als kompakter Körper in eine konventionelle Steckdose eingesteckt werden können und die auf der den elektrischen Anschlüssen abgewandten Seite Lichtquellen aufweisen, die als Markierungsleuchte einen Raum zumindest teilweise beleuchten bzw. als Orientierungslicht in einem Raum verwendet werden.

Die Aufgabe der vorliegenden Erfindung besteht darin, ein variabel verwendbares elektrisches Installationsgerät zu schaffen, das alternative Funktionalitäten ermöglicht und das montagefreundlich und optisch ansprechend ausgebildet ist.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass durch eine Integration eines Funktionsmoduls in ein Frontelement eines elektrischen Installationsgerätes und Verwendung eines Gerätesockels, der in Geometrie und Funktion für Steckdosen benutzt wird, eine alternative Verwendung für Funktionsmodule ermöglicht werden kann. Somit kann die bisherige Funktionalität eines Installationsgerätes deutlich verbessert werden.

Ein elektrisches Installationsgerät mit Basisbauteilen umfassend einen Gerätesockel mit Kontaktelementen zur Aufnahme von Kontaktstiften eines Gerätesteckers, kann einfach umgerüstet werden. Durch die Integration eines lösbaren Funktionsmoduls in das Frontelement des elektrischen Installationsgerätes kann eine bedarfsgerechte Anpassung und Umrüstung des Installationsgerätes an wechselnde Anforderungen am Montageort realisiert werden kann. Durch eine variable Nutzung von Funktionsmodulen kann ein vielseitig verwendbares Installationsgerät ermöglicht werden. Die definierte Konfiguration eines Gerätesockels für Gerätestecker kann ohne gerätespezifische Veränderungen als elektrische und mechanische Schnittstelle zu einem Funktionsmodul genutzt werden und schafft einen hohen Grad an Kompatibilität. Durch den einheitlich verwendbaren Gerätesockel können die Fertigungs- und Lagerkosten reduziert werden. Eine Verwendung kann sowohl in Aufputz- als auch in Unterputzinstallationen erfolgen.

Des Weiteren wird kein zusätzlicher Platz benötigt und die bereits vorhandene Struktur des Installationsgerätes, beispielsweise deren Abmessungen und deren Befestigungs- und Kontaktpunkte, können unverändert erhalten bleiben. Der Gerätesockel braucht für die Montage nicht aus dem Installationsgehäuse gelöst werden. Da lediglich das entsprechende Frontelement umgerüstet werden muss, um das Funktionsmodul einsetzen zu können, kann ein erheblicher Installationsvorteil entstehen.

Das Funktionsmodul kann als einteiliges Frontelement ausgebildet sein oder als zentraler Einsatz in einem vorhandenen Rahmen eines mehrteiligen Frontelementes angeordnet sein. Das Funktionsmodul kann eine in sich geschlossene Baugruppe bilden, so dass weder am Gerätesockel noch an dem Frontelement für deren Adaption Veränderungen notwendig sind. Das Funktionsmodul kann lösbar, beispielsweise selbsthaltend, in dem Installationsgerät befestigt werden. Vorteilhafterweise unterstützen komplementäre Rastmittel oder schraubende Verbindungen die Befestigung. Frontseitig kann das Funktionsmodul bündig mit einem Rahmen abschließen, wobei es vorteilhafterweise optisch an das Design des Rahmens oder weiterer vorhandener Installationsprodukte angepasst sein kann. Das Funktionsmodul weist zu einem Gerätestecker ein adäquates Kontaktbild auf, dessen Kontaktstifte in Kontaktelementen des unveränderten Gerätesockel mittels einer lösbaren Steckverbindung kontaktieren können. Die Kontaktierung des Funktionsmoduls kann vorteilhafterweise während des Montagevorganges selbsttätig erfolgen.

Das Funktionsmodul kann elektrische, optische und/oder mechanische Bauelemente enthalten, die beispielsweise auf einem Trägerelement angeordnet und/oder verschaltet sind. Neben funktionsspezifischen Bauelementen können Bauelemente für eine Strom-/Spannungsversorgung angeordnet werden, die eine eingehende Netzspannung beispielsweise in eine beliebige kleinere Spannung oder andere Energieart umgewandelt können. Neben drahtgebundenen Bauelementen können auch nicht drahtlos wirkende Bauelemente verwendet werden, beispielsweise zur Datenübertragung mittels Funk- oder Infrarotsignalen. Vorteilhafterweise kann ein drahtlos kommunizierendes Funktionsmodul in ein Installationsgerät integriert werden. Die notwendige Spannungsversorgung kann über den Gerätesockel geliefert werden, während die Signalübertragung drahtlos erfolgen kann.

Vorteilhafte Anwendungsbereiche für Funktionsmodule können sich im Bereich der Beleuchtung oder der Darstellung von Informationen, beispielsweise visuell und/oder akustisch wirkende Zustandsmeldungen, ergeben. Unterschiedlich ausgestaltete Funktionsmodule können spezifische Anforderungen an die Darstellung der Informationen erfüllen, beispielsweise mittels Display oder Beleuchtungskörpern oder in verschiedenen Farben, Intensitäten und Sprachen. In einer vorteilhaften Ausgestaltung können Funktionsmodule durch austauschbare oder ergänzende Einsätze oder Vorsätze an unterschiedliche Anforderungen angepasst werden. Darüber hinaus kann es vorteilhaft sein, wenn die Funktionsmodule durch integrierte oder externe Befehlseingabegeräte veränderbar und/oder programmierbar sind. Des weiteren kann die Erfindung bei der Integration von weiteren Funktionalitäten in Installationsgeräten Verwendung finden, z. B. Bewegungsmelder, Bild- oder Tonaufnahme bzw. - aussendung, Alarmfunktionen, Identifikationsfunktionen und/oder Datenverarbeitungsmodule.

In einer vorteilhaften Ausführung kann das Funktionsmodul zur Beleuchtung und/oder Darstellung von Informationen genutzt werden. In einem solchen Funktionsmodul kann von einer Lichtquelle Licht erzeugt werden, das durch einen lichtdurchlässigen Bereich nutzerseitig abgestrahlt werden kann. Der lichtdurchlässige Bereich kann lösbar in einem Gehäusekörper des Funktionsmoduls befestigt werden, um im Bedarfsfall einen Austausch zu ermöglichen. Optional können komplementäre Rastmittel eine zusätzliche Fixierung schaffen. In einer weiteren Ausführung sind jedoch auch unlösbare Verbindungen möglich, die vorteilhafterweise klebend erfolgen. Des Weiteren kann ein Gehäusekörper einen einteilig integrierten lichtdurchlässigen Bereich aufweisen.

Im Rahmen der Erfindung kann als lichtdurchlässiger Bereich ein transparenter Einsatz oder ein lichtleitender Körper verstanden werden, der das Licht nutzerseitig abstrahlt. In einer vorteilhaften Ausgestaltung kann der lichtdurchlässige Bereich als lichtverteilender Körper ausgebildet werden, in den das Licht von einer Lichtquelle eingestrahlt wird. Der lichtleitende Körper ermöglicht der Lichtquelle einen größeren Abstrahlbereich. Da die Abstrahlung einer identischen Lichtmenge über eine große Fläche weniger grell und blendend empfunden wird, ist die Verwendung eines lichtverteilenden Körpers von Vorteil. Durch die Gestaltung des Abstrahlbereiches können sich unterschiedliche Lichteffekte und -verteilungen definieren lassen, beispielsweise finden angefaste oder abgestufte Abstrahlbereiche Verwendung. Der lichtverteilende Körper kann Acrylglas enthalten. Dabei weisen polierte Flächen eine vorwiegend reflektierende und angeraute Flächen eine vorwiegend emittierenden Wirkung auf.

Durch die Anordnung, Anzahl, Form und/oder Farbe des lichtdurchlässigen Bereiches können unterschiedliche Lichteffekte und -verteilungen realisiert werden, beispielsweise Figuren, Muster, Buchstaben oder Schriftzeichen. So kann einerseits ein Markierungs- bzw. Orientierungslicht gestaltet und darüber hinaus eine zusätzliche Information dargestellt werden.

In einer vorteilhaften Ausgestaltung kann eine Oberfläche des lichtdurchlässigen Bereiches vollständig oder teilweise beschichtet sein und zur gezielten Beleuchtung oder Informationsanzeige genutzt werden. Vorteilhafterweise kann diese Beschichtung vollständig oder teilweise lichtdurchlässig ausgebildet sein. Im unbenutzten Zustand kann eine ununterbrochene Oberfläche ermöglicht werden und gegenüber Standardausstattungen das gleiche Erscheinungsbild gewahrt werden. Die Beleuchtungsfunktion ist quasi unsichtbar in das Installationsgerät integriert.

Um das von der Lichtquelle abgestrahlte Licht darüber hinaus effektiv und bedarfsgerecht nutzen zu können, können Licht modulierende, beispielsweise verteilende, bündelnde und/oder beschränkende, Elemente in/an dem Funktionsmodul ausgebildet sein. Beispielsweise können innerhalb oder außerhalb des Funktionsmoduls angeordnete Linsen, Filter, Diffuser, Reflexionsflächen oder sonstige lichtlenkende Einsätze oder Vorsätze benutzt werden, die lösbar befestigt werden, um im Bedarfsfall einen Austausch zu ermöglichen. In einer weiteren Ausführung sind jedoch auch unlösbare Verbindungen möglich, die vorzugsweise klebend erfolgen.

Das Licht wird von einer oder mehreren Lichtquellen erzeugt und direkt oder über einen lichtleitenden Körper (Lichtleiter, Linse) zum lichtdurchlässigen Bereich des Funktionsmoduls transferiert. Die Lichtquelle und/oder der Lichtleiter sind innerhalb des Funktionsmoduls auf einem Trägerelement beispielsweise einer Platine, einem Sockel oder einem Gehäuse angeordnet. Als Lichtquellen eignen sich mehrfarbige Leuchtdioden (LED's, OLED's), Laserdioden, Glimmlampen, Kaltkathodenlampen, Glühlampen oder elektrolumineszierende Lampen (EL-Folie).

Vorteilhafterweise können die Beleuchtungsfunktionen nutzer-, verbrauchs-, zeit-, programm- oder ereignisabhängig gesteuert werden, wobei ein entsprechendes drahtloses oder drahtgebundenes (Bus-)Signal in die Stromversorgung der Lichtquelle eingreift. Dabei können im einfachsten Fall manuell zu bedienende Befehlgeber (Schalter, Taster) an dem Funktionsmodul vorhanden sein, die beispielsweise die Lichtquelle ein- und ausschalten und/oder das erzeugte Licht beeinflussen. In einer weiteren Ausführungsform kann ein Dämmerungsschalter vorgesehen sein, der die Beleuchtung des Installationsgerätes erst bei unzureichenden Lichtverhältnissen aktiviert. In einer weiteren Ausführungsform kann ein Bewegungsmelder vorgesehen sein, der die Beleuchtung des Installationsgerätes erst bei Anwesenheit einer Person aktiviert. Des weiteren kann eine Aktivierung der Beleuchtung durch weitere interne und/oder externe Signalgeber möglich sein, z. B. zeit-, programm- oder ereignisgesteuert (Transponder). So braucht der Beleuchtung keine Energie zugeführt werden, wenn die Beleuchtung aufgrund ausreichender Lichtverhältnisse oder Nichtnutzung von Räumen überflüssig ist.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Fig. 1: eine perspektivische Darstellung eines elektrischen Installationsgerätes,
- Fig. 2: einen Schnitt durch ein schematisch dargestelltes elektrisches Installationsgerät nach Fig. 1,
- Fig. 3: eine perspektivische Darstellung eines weiteren elektrischen Installationsgerätes,
- Fig. 4: einen Schnitt durch ein schematisch dargestelltes elektrisches Installationsgerät nach Fig. 3,
- Fig. 5: einen Schnitt durch ein weiteres schematisch dargestelltes elektrisches Installationsgerät umfassend ein Funktionsmodul mit einem Vorsatz und
- Fig. 6: einen Schnitt durch ein weiteres schematisch dargestelltes elektrisches Installationsgerät umfassend ein Funktionsmodul mit einem weiteren Vorsatz.

Gleiche oder gleichwirkende Bauteile sind in der nachfolgenden Beschreibung mit gleichen Bezugszeichen versehen.

Nachfolgend wird der Aufbau und die Funktionsweise des erfindungsgemäßen elektrischen Installationsgerätes 1 schematisch anhand von alternativen Ausführungsbeispielen näher beschrieben.

Das elektrische Installationsgerät 1 kann in einem nicht dargestellten Installationsgehäuse befestigt werden, welches ortsfest in einer Gebäudewand fixiert ist. Das elektrische Installationsgerät 1 weist einen Gerätesockel 2 auf, den außenseitig ein Tragrahmen 3 umgibt, der die Befestigung des elektrischen Installationsgerätes 1 in dem Installationsgehäuse ermöglicht. Frontseitig ist ein mehrteiliges Frontelement 4 angeordnet. In dem Gerätesockel 2 sind Klemmen 5 zum Anschluss von Leitungen einer Spannungsversorgung und damit verbundene metallische Kontaktelemente 6 angeordnet, in die frontseitig Steckerstifte gesteckt werden können.

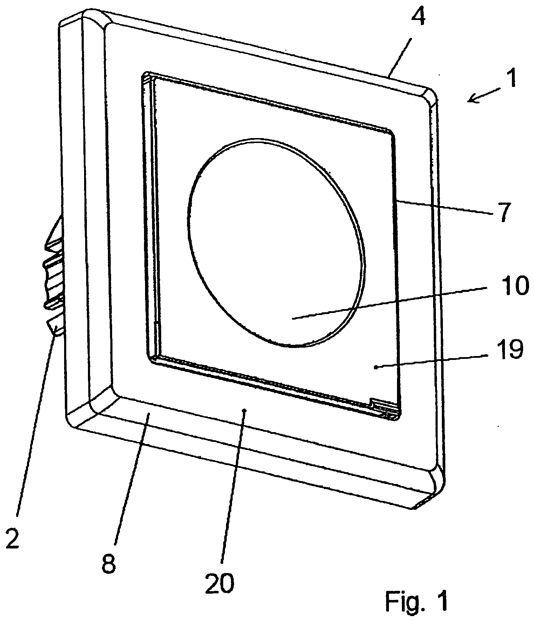

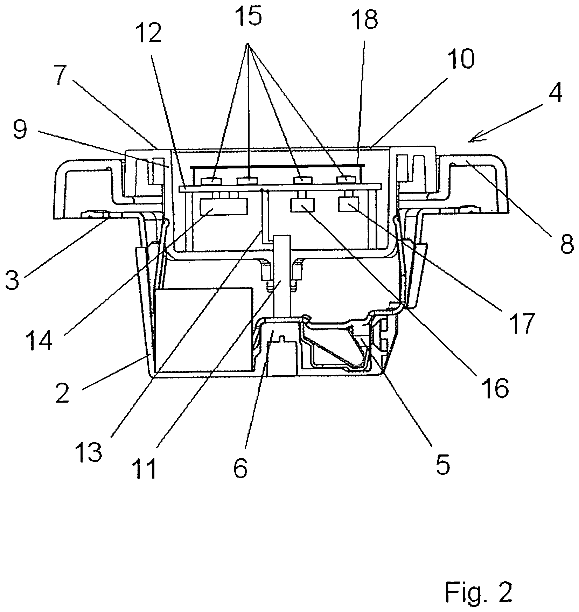

Das Frontelement 4 gemäß der Fig. 1 und der Fig. 2 umfasst ein Funktionsmodul 7 und einen umgebenden Rahmen 8. Das Funktionsmodul 7 ist unter teilweiser Zwischenlage des Rahmens 8 reibschlüssig in dem Gerätesockel 2 befestigt. Das Funktionsmodul 7 kann zusätzlich schraubend befestigt werden. Das Funktionsmodul 7 weist einen quaderförmigen Gehäusekörper 9 auf, der frontseitig von einem lichtdurchlässigen Bereich 10 verschlossen ist. Rückseitig des Funktionsmoduls 7 sind Steckerstifte 11 ausgeführt, die elektrisch kontaktierend mit den Kontaktelementen 6 des Gerätesockels 2 lösbar verbunden sind. Innerhalb des Funktionsmoduls 7 befindet sich ein ortsfest angeordnetes Trägerelement 12, vorzugsweise eine Leiterplatte. Auf diesem Trägerelement 12 sind elektrische und optische Bauelemente angeordnet und verschaltet. Verbindungsleitungen 13 zwischen den Steckerstiften 11 und dem Trägerelement 12 ermöglichen eine Spannungsversorgung der elektrischen und optischen Bauelemente. Insbesondere befindet sich an dem Trägerelement 12 ein Transformator 14, der die eingehende Spannung bedarfsgerecht umwandelt. Des Weiteren befinden sich oberseitig auf dem Trägerelement 12 Lichtquellen 15 und unterseitig befindet sich eine Steuerelektronik 16 zur Ansteuerung der Lichtquellen 15. Ein Funkbaustein 17 ist unterseitig angeordnet und ist als Empfänger und/oder Sender von drahtlosen Signalen ausgebildet, der schaltend in die Steuerelektronik 16 der Lichtquellen 15 eingreift und eine fern betätigbare Ansteuerung der Beleuchtung ermöglicht. Darüber hinaus ist zwischen den Lichtquellen 15 und dem lichtdurchlässigen Bereich 10 ein Licht modulierender Einsatz 18 in Form eines Diffuser angeordnet, der das von den Lichtquellen 15 erzeugte Licht bedarfsgerecht moduliert. Des Weiteren weist der lichtdurchlässige Bereich 10 eine Beschichtung 19 auf, die der Oberfläche 20 des umgebenden Rahmens 8 angepasst ist. Im montierten Zustand ist das Funktionsmodul 7 flächenbündig in den Rahmen 8 integriert.

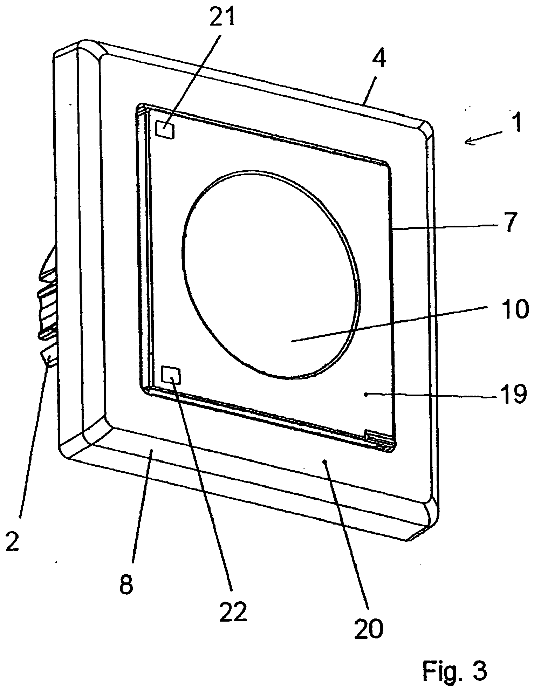

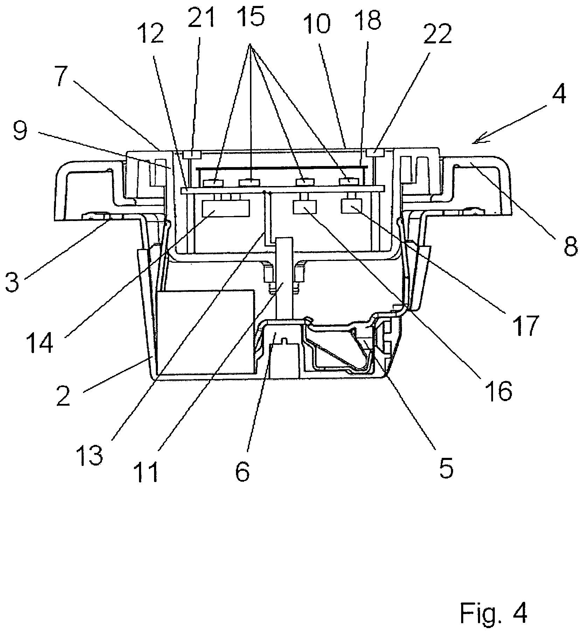

In der Fig. 3 und in der Fig. 4 ist eine alternative Ausführungsform des Installationsgerätes 1 dargestellt, bei der zusätzlich ein manuell zu betätigender Befehlsgeber 21 in Form eines Schalters in das Funktionsmodul 7 integriert ist. Der Schalter 21 greift in die Steuerelektronik 16 der Lichtquellen 15 ein und ermöglicht eine nutzerseitige Ansteuerung der Beleuchtung. Des weiteren ist ein lichtempfindlicher Sensor 22 in das Funktionsmodul 7 integriert, der bei Unterschreiten eines definierten Helligkeitswertes die Lichtquellen 15 schaltet, so dass eine Ansteuerung der Lichtquellen 15 in Abhängigkeit von einem Umgebungslicht des näheren Umfeldes des Installationsgerätes 1 ermöglicht wird.

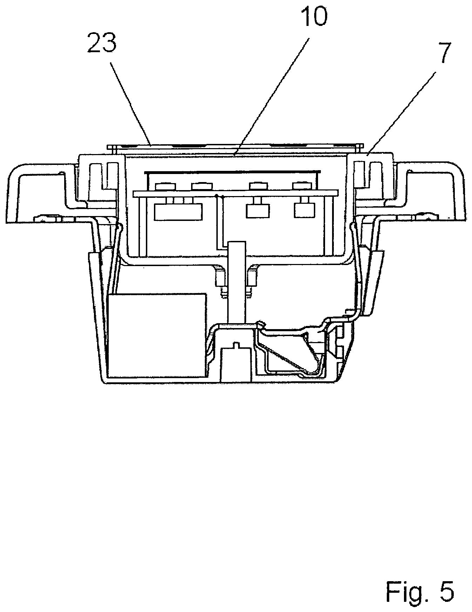

In Fig. 5 ist eine weitere Ausführungsform des Installationsgerätes 1 dargestellt, bei der dem lichtdurchlässigen Bereich 10 des Funktionsmoduls 7 ein auswechselbarer Vorsatz 23 in Form einer Symbolscheibe vorgesetzt ist. Die Symbolscheibe weist Anzeigen und Symbole auf, die bei Hinterstrahlung durch die Lichtquellen 15 ihren Informationsgehalt deutlich sichtbar werden lassen, beispielsweise als Hinweis auf Örtlichkeiten oder Notausgänge. Der Vorsatz 23 ist lösbar an dem Funktionsmodul 7 befestigt.

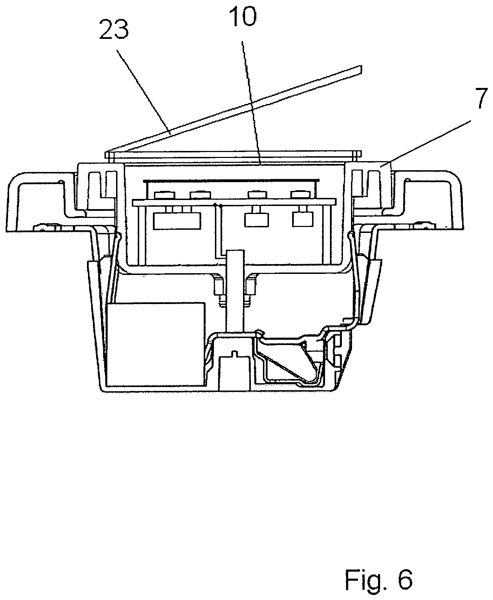

In Fig. 6 ist eine weitere Ausführungsform des Installationsgerätes 1 dargestellt, bei der dem lichtdurchlässigen Bereich 10 des Funktionsmoduls 7 ein auswechselbarer Vorsatz 23 in Form eines Trichters vorgesetzt ist. Der Trichter ermöglicht eine Bündelung und Lenkung des ausgesandten Lichtes in eine definierte Richtung, beispielsweise zur bodenseitigen Beleuchtung von Räumlichkeiten. Der Vorsatz 23 ist lösbar an dem Funktionsmodul 7 befestigt.

### Bezugszeichenliste

- 1: elektrisches Installationsgerät
- 2: Gerätesockel
- 3: Tragrahmen
- 4: Frontelement
- 5: Klemme
- 6: Kontaktelement
- 7: Funktionsmodul
- 8: Rahmen
- 9: Gehäusekörper
- 10: lichtdurchlässiger Bereich
- 11: Steckerstifte
- 12: Trägerelement
- 13: Verbindungsleitungen
- 14: Transformator
- 15: Lichtquelle
- 16: Steuerelektronik
- 17: Funkbaustein
- 18: Einsatz
- 19: Beschichtung
- 20: Oberfläche
- 21: Befehlsgeber
- 22: lichtempfindlicher Sensor
- 23: Vorsatz

## Patentansprüche

1. Elektrisches Installationsgerät (1) umfassend einen Gerätesockel (2) für eine Steckdose, der mittels eines Tragrahmens (3) in einem Installationsgehäuse befestigbar ist, und ein frontseitig befestigtes Frontelement (4), das ein- oder mehrteilig sein kann, wobei im Gerätesockel (2) angeordnete Kontaktelemente (6) an eine Netzspannung anschließbar sind und zur Aufnahme von Steckerstiften eines Gerätesteckers ausgebildet sind, wobei das Frontelement (4) ein Funktionsmodul (7) umfasst, das lösbar am Gerätesockel (2) anordenbar ist,
**dadurch gekennzeichnet, dass**
das Funktionsmodul (7) ein zu dem Gerätestecker adäquates Kontaktbild aufweist, so dass Steckerstifte (11) des Funktionsmoduls (7) lösbar in die Kontaktelemente (6) des Gerätesockels (2) steckbar sind, und dass das Funktionsmodul (7) einen quaderförmigen Gehäusekörper (9) aufweist, der von einem Rahmen (8) des Frontelementes (4) umgeben ist.

2. Elektrisches Installationsgerät nach Patentanspruch, **dadurch gekennzeichnet, dass** das Funktionsmodul (7) selbsthaltend an dem Gerätesockel (2) anordenbar ist.

3. Elektrisches Installationsgerät nach einem der vorhergehenden Patentansprüche, **dadurch gekennzeichnet, dass** das Funktionsmodul (7) flächenbündig zu dem umgebenden Rahmen (8) anordenbar ist.

4. Elektrisches Installationsgerät nach einem der vorhergehenden Patentansprüche, **dadurch gekennzeichnet, dass** das Funktionsmodul (7) zumindest eine Lichtquelle (15) aufweist.

5. Elektrisches Installationsgerät nach einem der vorhergehenden Patentansprüche, **dadurch gekennzeichnet, dass** das Funktionsmodul (7) zumindest einen lichtdurchlässigen Bereich (10) aufweist.

6. Elektrisches Installationsgerät nach Patentanspruch 5, **dadurch gekennzeichnet, dass** der lichtdurchlässige Bereich (10) als transparenter Körper oder als lichtleitender Körper ausgebildet ist.

7. Elektrisches Installationsgerät nach einem der vorhergehenden Patentansprüche, **dadurch gekennzeichnet, dass** das Funktionsmodul (7) zumindest einen Licht modulierenden Einsatz (18) und/oder Vorsatz (23) aufweist.

8. Elektrisches Installationsgerät nach Patentanspruch 7, **dadurch gekennzeichnet, dass** der Licht modulierende Einsatz (18) und/oder Vorsatz (23) lösbar an oder in dem Funktionsmodul (7) angeordnet ist.

9. Elektrisches Installationsgerät nach einem der vorhergehenden Patentansprüche, **dadurch gekennzeichnet, dass** in dem Funktionsmodul (7) ein Transformator (14) und/oder eine Steuerelektronik (16) angeordnet ist.

10. Elektrisches Installationsgerät nach einem der vorhergehenden Patentansprüche, **dadurch gekennzeichnet, dass** das Funktionsmodul (7) drahtgebunden und/oder drahtlos steuerbar ist.

11. Elektrisches Installationsgerät nach einem der vorhergehenden Patentansprüche, **dadurch gekennzeichnet, dass** das Funktionsmodul (7) nutzer-, Verbrauchs-, zeit-, programm- oder ereignisabhängig steuerbar ist.

12. Elektrisches Installationsgerät nach einem der vorhergehenden Patentansprüche, **dadurch gekennzeichnet, dass** das Funktionsmodul (7) einen manuell bedienbaren Befehlsgeber (21) aufweist.

13. Elektrisches Installationsgerät nach einem der vorhergehenden Patentansprüche, **dadurch gekennzeichnet, dass** das Funktionsmodul (7) einen lichtempfindlichen Sensor (22) aufweist.

## Claims

1. An electrical installation device (1) having a device base (2) for a socket which can be fastened in an installation housing by means of a support frame (3) and having a front element (4) which is fastened at the front side and which can be single-part or multi-part, wherein contact elements (6) arranged in the device base (2) can be connected to a mains voltage and are configured for the reception of plug pins of a device plug; and wherein the front element (4) comprises a functional module (7) which can be releasably arranged at the device base (2), **characterized in that**
the functional module (7) has a contact pattern which is suitable for the device plug such that plug pins (11) of the functional module (7) can be releasably plugged into the contact elements (6) of the device base (2); and **in that** the functional module (7) has a parallelepiped housing body (9) which is surrounded by a frame (8) of the front element (4).

2. An electrical installation device in accordance with claim 1, **characterized in that** the functional module (7) can be arranged at the device base (2) in a self-retaining manner.

3. An electrical installation device in accordance with one of the preceding claims, **characterized in that** the functional module (7) can be arranged with areal alignment with respect to the surrounding frame (8).

4. An electrical installation device in accordance with any one of the preceding claims, **characterized in that** the functional module (7) has at least one light source (15).

5. An electrical installation device in accordance with any one of the preceding claims, **characterized in that** the functional module (7) has at least one light-permeable region (10).

6. An electrical installation device in accordance with claim 5, **characterized in that** the light-permeable region (10) is configured as a transparent body or as a light-conductive body.

7. An electrical installation device in accordance with any one of the preceding claims, **characterized in that** the functional module (7) has at least one insert (18) and/or attachment (23) modulating the light.

8. An electrical installation device in accordance with claim 7, **characterized in that** the insert (18) and/or attachment (23) modulating the light is/are releasably arranged at or in the functional module (7).

9. An electrical installation device in accordance with any one of the preceding claims, **characterized in that** a transformer (14) and/or an electronic control system (16) is/are arranged in the functional module (7).

10. An electrical installation device in accordance with any one of the preceding claims, **characterized in that** the functional module (7) can be controlled in a wired and/or wireless manner.

11. An electrical installation device in accordance with any one of the preceding claims, **characterized in that** the functional module (7) can be controlled in dependence on the user, the consumption, the time, the program or the event.

12. An electrical installation device in accordance with any one of the preceding claims, **characterized in that** the functional module (7) has a manually operable control device (21).

13. An electrical installation device in accordance with any one of the preceding claims, **characterized in that** the functional module (7) has a light-sensitive sensor (22).

## Revendications

1. Appareil d'installation électrique (1) incluant un socle (2) pour une prise, qui est susceptible d'être fixé au moyen d'un cadre porteur (3) dans un boîtier d'installation, et un élément frontal (4), fixé du côté frontal, qui peut être en une seule pièce ou en plusieurs pièces, dans lequel des éléments de contact (6) agencés dans le socle (2) sont susceptibles d'être raccordés à la tension d'un réseau et sont réalisés pour recevoir des fiches mâles d'une prise de l'appareil, dans lequel l'élément frontal (4) inclut un module fonctionnel (7) qui est susceptible d'être agencé de façon détachable sur le socle (2) de l'appareil,
**caractérisé en ce que**
le module fonctionnel (7) présente un motif de contact adéquat par rapport à la prise de l'appareil, de sorte que les fiches mâles (11) du module fonctionnel (7) sont susceptibles d'être enfichées de façon détachable dans les éléments de contact (6) du socle (2) de l'appareil, et **en ce que** le module fonctionnel (7) comprend un corps de boîtier parallélépipédique (9), qui est entouré par un cadre (8) de l'élément frontal (4).

2. Appareil d'installation électrique selon la revendication 1, **caractérisé en ce que** le module fonctionnel (7) est susceptible d'être agencé de manière à se maintenir de façon autonome sur le socle (2) de l'appareil.

3. Appareil d'installation électrique selon l'une des revendications précédentes, **caractérisé en ce que** le module fonctionnel (7) est susceptible d'être agencé en affleurement vis-à-vis de la surface du cadre (8) qui l'entoure.

4. Appareil d'installation électrique selon l'une des revendications précédentes, **caractérisé en ce que** le module fonctionnel (7) comprend au moins une source de lumière (15).

5. Appareil d'installation électrique selon l'une des revendications précédentes, **caractérisé en ce que** le module fonctionnel (7) comporte au moins une zone (10) transparente à la lumière.

6. Appareil d'installation électrique selon la revendication 5, **caractérisé en ce que** la zone transparente à la lumière (10) est réalisée sous forme de corps transparent ou de corps guidant la lumière.

7. Appareil d'installation électrique selon l'une des revendications précédentes, **caractérisé en ce que** le module fonctionnel (7) comprend au moins un insert (18) et/ou un dispositif antérieur (23) qui module la lumière.

8. Appareil d'installation électrique selon la revendication 7, **caractérisé en ce que** l'insert (18) et/ou le dispositif antérieur (23) qui module la lumière est agencé de façon détachable sur ou dans le module fonctionnel (7).

9. Appareil d'installation électrique selon l'une des revendications précédentes, **caractérisé en ce qu'**un transformateur (14) et/ou une électronique de commande (16) est agencé(e) dans le module fonctionnel (7).

10. Appareil d'installation électrique selon l'une des revendications précédentes, **caractérisé en ce que** le module fonctionnel (7) est susceptible d'être commandé via une liaison filaire et/ou sans fil.

11. Appareil d'installation électrique selon l'une des revendications précédentes, **caractérisé en ce que** le module fonctionnel (7) est susceptible d'être commandé par un utilisateur, en fonction d'une consommation, en fonction du temps, en fonction d'un programme ou en fonction d'un événement.

12. Appareil d'installation électrique selon l'une des revendications précédentes, **caractérisé en ce que** le module fonctionnel (7) comprend un émetteur d'ordre (21) à actionnement manuel.

13. Appareil d'installation électrique selon l'une des revendications précédentes, **caractérisé en ce que** le module fonctionnel (7) comprend un capteur photosensible (22).
